# FASCICULE DE BREVET EUROPEEN

(11) **EP 3 670 220 B1**
(45) Date de publication et mention de la délivrance du brevet: **01.09.2021**
(21) Numéro de dépôt: 19217574.3
(22) Date de dépôt: 18.12.2019
(51) Int. Cl.: B60J 5/10, B60R 5/04, B60R 7/02

(54) **OUVRANT ARRIÈRE DE VÉHICULE AUTOMOBILE COMPRENANT UN VOLUME DE RANGEMENT INTERNE VARIABLE**
RÜCKSEITIGES ÖFFNUNGSELEMENT EINES KRAFTFAHRZEUGS, DAS EINEN VARIABLEN INNEREN ABLAGERAUM UMFASST
REAR DOOR OF A MOTOR VEHICLE COMPRISING A VARIABLE INTERNAL STORAGE VOLUME

(30) Priorité: 19.12.2018 FR 1873440
(43) Date de publication de la demande: 24.06.2020
(73) Titulaire: Compagnie Plastic Omnium, 69007 Lyon (FR)
(72) Inventeur: LETERRIER, Franck, 01150 Sainte-Julie (FR)
(74) Mandataire: LLR

(56) Documents cités:
- WO-A1-2018/108306
- FR-A1- 2 579 941
- US-B2- 8 356 852

## Description

L'invention concerne les ouvrants arrière de véhicule automobile.

On entend par ouvrant arrière le panneau arrière d'un véhicule automobile capable de s'ouvrir de haut en bas ou de bas en haut.

Actuellement, la livraison de colis, par exemple suite à un achat sur Internet, s'effectue le plus souvent au domicile de la personne ayant procédé à l'achat. Malheureusement, la plupart des livraisons interviennent alors que l'acheteur n'est pas présent à son domicile. Le colis peut dès lors être déposé dans un point de retrait pour que l'acheteur puisse le retirer ultérieurement, par exemple dans le cas où le colis n'est remis que contre signature.

Une solution alternative serait de livrer un colis dans le véhicule de l'acheteur. En effet, cela pourrait permettre à un acheteur utilisant son véhicule, par exemple pour se rendre au travail (ou si le véhicule est stationné devant son domicile alors qu'il est absent), de recevoir son colis à l'intérieur de ce dernier lorsqu'il le prend sans avoir à passer par un point de retrait.

Il existe aujourd'hui des dispositifs permettant de donner accès à distance à son véhicule à un tiers, par exemple un livreur, par exemple en utilisant son smartphone. Plus précisément, il s'agit de placer les clés du véhicule dans un logement de petite taille, situé derrière la plaque d'immatriculation mobile, connecté à son smartphone. Il est dès lors possible de déverrouiller la plaque d'immatriculation à distance pour donner accès aux clés à un tiers pour que ce dernier puisse placer le ou les colis dans le véhicule. Le tiers peut par la suite refermer le véhicule et placer à nouveau les clés dans la plaque d'immatriculation.

Cette solution présente un problème de taille. En effet, elle consiste à donner accès à l'intégralité de l'habitacle du véhicule. Cela peut poser un problème en termes de sécurité car le tiers a accès au véhicule, notamment aux différents effets personnels du propriétaire du véhicule. De plus, les clés du véhicule sont laissées au niveau de ce dernier. Le document WO 2018/108306 A1 divulgue une solution alternative pour la livraison de colis dans un véhicule.

L'invention a notamment pour but de remédier au problème précité en fournissant un dispositif permettant à un tiers de livrer un objet dans un véhicule de façon plus sécurisée que celle de l'art antérieur.

A cet effet l'invention a pour objet un ouvrant arrière de véhicule automobile comprenant :
- un panneau extérieur,
- une doublure, et
- une cavité ménagée entre le panneau extérieur et la doublure, la cavité étant accessible à partir d'une trappe mobile apte à obturer une ouverture ménagée dans le panneau extérieur, l'ouvrant arrière comprenant des moyens aptes à faire varier un volume de la cavité, la doublure comprenant un fond mobile.

Ainsi, on obtient un ouvrant arrière permettant à un tiers, par exemple un livreur, de placer un colis directement dans la cavité de l'ouvrant arrière sans que ce tiers n'ait accès au reste de l'habitacle du véhicule. De plus, la présence d'un fond mobile permet de faire varier le volume de la cavité et par conséquent d'adapter ce dernier en fonction de la taille du colis à placer dans la cavité.

L'ouvrant mobile selon l'invention peut en outre comprendre au moins une des caractéristiques suivantes :
- la doublure comprend un renfoncement formant un fond de la cavité,
- le fond mobile est mobile en translation, de préférence par un mouvement télescopique,
- le fond mobile est apte à être mis en mouvement de manière automatisée,
- l'ouvrant arrière comprend des moyens de retenue aptes à bloquer la trappe mobile dans une position d'ouverture maximale, et
- l'ouvrant arrière comprend des moyens automatisés d'ouverture et de fermeture de la trappe mobile.

### Brève description des figures

Nous allons maintenant présenter des modes de réalisation de l'invention donnés à titre d'exemples non limitatifs et à l'appui des figures annexées sur lesquelles :
[Fig. 1] est une vue en perspective d'un ouvrant arrière selon l'invention, la trappe mobile étant en position fermée ;
[Fig. 2] est une vue en perspective de l'ouvrant arrière de la figure 1, la trappe mobile étant en position ouverte ;
[Fig. 3] est une vue partiellement éclatée de l'ouvrant arrière des figures 1 et 2 ;
[Fig. 4] est une vue en perspective de l'ouvrant des figures 1 et 2 du côté de la doublure ;
[Fig. 5] est une vue en coupe d'un ouvrant arrière selon un premier mode de réalisation l'invention illustrant la cavité, la trappe mobile étant en position fermée ;
[Fig. 6] est une vue en coupe de l'ouvrant arrière de la figure 5, la trappe mobile étant en position ouverte ;
[Fig. 7] est une vue en perspective de l'ouvrant arrière selon un second mode de réalisation de l'invention, la trappe mobile étant en position ouverte ; et [Fig. 8] est une vue en coupe de l'ouvrant arrière de la figure 5 illustrant la cavité.

### Description détaillée

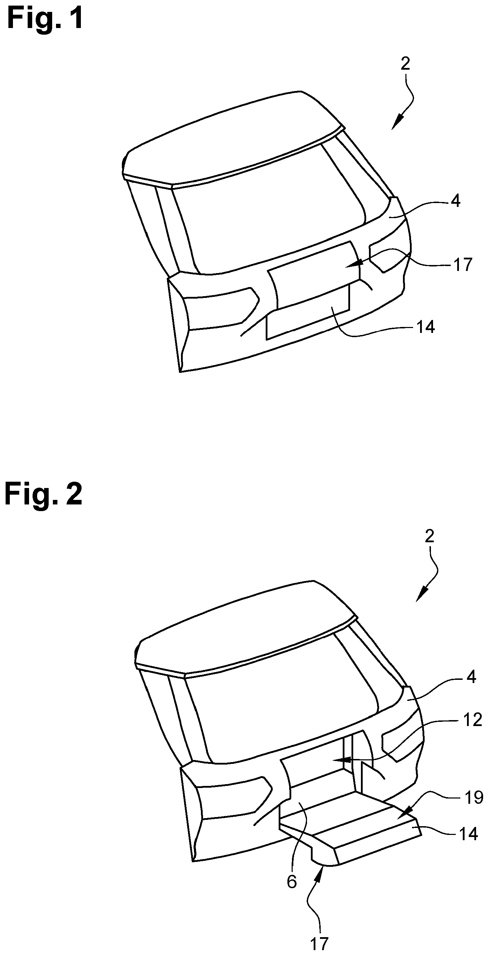

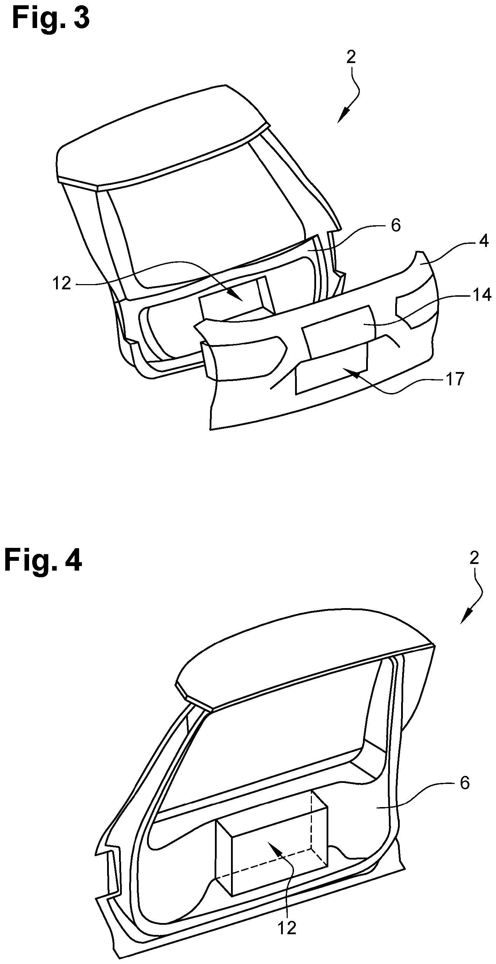

On se réfère désormais aux figures 1 à 4 illustrant un ouvrant arrière 2 (plus précisément un hayon) comprenant un panneau extérieur 4 et une doublure 6 formant, lorsqu'ils sont assemblés, un corps principal de l'ouvrant arrière 2.

Le panneau extérieur 4 peut être réalisé en matière plastique, par exemple en utilisant un polymère thermoplastique. La doublure 6 peut également être réalisée en matière plastique, par exemple en utilisant un polymère thermoplastique ou thermodurcissable. Le panneau extérieur 4 et la doublure 6 sont reliés l'un à l'autre, de manière classique par collage (toute autre procédé de fixation connu de l'homme du métier peut être utilisé). Tous ces aspects sont connus de l'homme du métier et ne feront pas l'objet d'une description détaillée par la suite.

Le panneau extérieur 4 et la doublure 6 sont conçus de manière à générer un corps creux entre eux dans la partie basse de l'ouvrant arrière 2 située sous la lunette arrière. En d'autres termes, une cavité 12, correspondant au volume disponible ménagé entre le panneau extérieur 4 et la doublure 6, est réalisée par la réunion du panneau extérieur 4 et de la doublure 6, qui sont de façon générale assemblés par collage par leurs bords et distants l'un de l'autre entre ces bords. Plus précisément, la doublure 6 est fabriquée de manière à former la cavité 12 comme cela sera décrit par la suite. Le panneau extérieur 4 comprend quant à lui une ouverture permettant l'accès à la cavité 12, cette ouverture étant obturée par une trappe mobile 14. La trappe mobile 14 constitue le seul point d'accès à la cavité 12 depuis l'extérieur du véhicule.

Dans ce cas de figure, la doublure 6 peut être réalisée d'un seul tenant en étant par exemple moulée dans sa partie basse de manière à comprendre un renfoncement formant le fond de la cavité 12. Selon une variante non couverte par la présente demande, le volume de la cavité 12 est fixe, car faisant partie intégrante de la doublure structurelle. Cela permet de conserver une résistance mécanique accrue. La doublure 6 peut être moulée de manière à permettre d'obtenir une cavité 12 plus ou moins profonde. Elle pourrait alternativement comprendre une ouverture au niveau de laquelle une pièce rapportée formant le fond de la cavité 12 est fixée sans possibilité de mouvement. Cela permet de standardiser la production de la doublure 6 pour tous les véhicules tout en fixant une pièce rapportée dont la forme peut varier d'un véhicule à l'autre selon les besoins de l'utilisateur afin de créer une cavité 12 d'un volume particulier. Dans ce cas, le volume de la cavité 12 est fixe pour un même véhicule mais potentiellement différent d'un véhicule à un autre.

Selon l'invention, la cavité 12 comprend des moyens permettant de faire varier le volume de cette dernière sur un même véhicule au cours de son utilisation. La doublure 6 comprend un fond mobile 16, par exemple monté au niveau d'une ouverture ménagée dans la doublure 6. La mobilité du fond mobile 16 permet d'augmenter le volume de la cavité 12 tout en faisant en sorte que cette cavité 12 reste ménagée entre la doublure 6 et le panneau extérieur 4 sans donner accès à l'habitacle du véhicule.

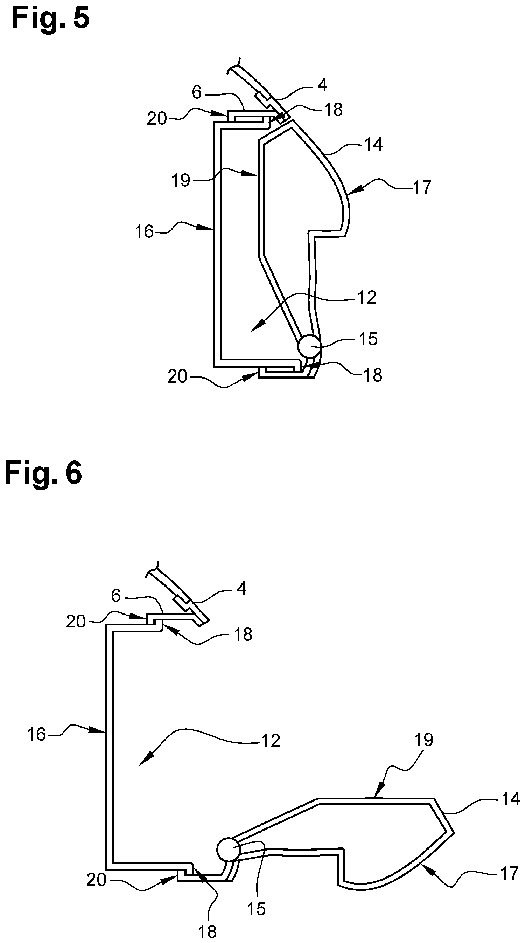

Dans l'exemple illustré sur les figures 5, 6 et 8, le fond mobile 16 est mobile en translation (il pourrait s'agir d'un mouvement différent). Il peut s'agir, comme cela est visible sur les figures précitées, d'un mouvement de type télescopique. Le fond mobile 16 peut dès lors être déplacé par translation jusqu'à atteindre des butées mécaniques de fin course 18 et 20. Les butées mécaniques de fin de course 18 et 20 permettent de maintenir le fond mobile 16 dans l'ouverture ménagée pour le monter. Le fond mobile 16 ainsi que l'ouverture au niveau de laquelle il est monté peuvent être dimensionnés de manière à garantir l'étanchéité de la doublure 6. Le fond mobile 16 peut également être composé de plusieurs portions imbriquées les unes dans les autres et déployables de manière télescopique les unes par rapport aux autres.

La partie mobile (par exemple le fond mobile 16) peut être mise en mouvement manuellement. Il est possible qu'un tiers souhaitant placer un élément dans la cavité 12 puisse, par exemple à l'aide de cet élément, pousser la partie mobile de la doublure 6. On peut dès lors prévoir la présence de moyens de rappel permettant, lorsque l'élément placé dans la cavité est enlevé, à la cavité 12 de retrouver son volume initial. On peut par exemple utiliser à cet effet au moins un ressort.

Il est également possible de prévoir que la partie mobile (par exemple le fond mobile 16) soit mise en mouvement de manière automatisée à l'aide d'au moins un actionneur (par exemple un vérin ou tout autre moyen permettant une telle mise en mouvement). Dans ce cas, l'actionneur de la partie mobile peut être contrôlé par une unité de commande électronique permettant l'augmentation du volume de la cavité 12 si nécessaire (par exemple en cas de détection par un capteur (monté dans la cavité 12) d'un élément, par exemple un colis, placé dans la cavité 12).

La trappe mobile 14 permet quant à elle d'avoir accès à la cavité 12. Elle peut être formée, comme cela est visible sur les figures 5, 6 et 8, d'une paroi externe 17 formant une partie du panneau extérieur 4 et d'une paroi interne 19 formant, lorsque la trappe mobile 14 est fermée, une des parois du corps creux définissant la cavité 12. Elle peut être mobile en rotation (comme cela est visible sur les figures avec la présence d'une articulation 15, par exemple de type liaison pivot), comme cela est le cas dans les exemples illustrés sur les figures. Elle pourrait également être mobile en translation, par exemple en étant coulissante (en se logeant par exemple à l'intérieur du panneau extérieur 4 ou entre ce dernier et la doublure 6 pour permettre l'accès à la cavité 12). Des mouvements plus complexes, combinant par exemple rotation et translation, peuvent également être envisagés.

La trappe mobile 14 est verrouillable par une serrure électronique ou par d'autres moyens connus par ailleurs. Cette serrure est connectée à une unité de commande électronique. Elle peut être déverrouillée par un tiers, par exemple un livreur, par lecture d'un élément d'identification. L'ouvrant arrière 2 peut à cet effet comprendre un lecteur de codes QR ou encore un lecteur de type NFC afin de permettre ce déverrouillage. Il est également possible d'envisager l'envoi d'informations en temps réel au propriétaire du véhicule, par exemple sur son smartphone (déverrouillage de la trappe mobile 14, identification de la personne déverrouillant la trappe mobile 14, information sur la réalisation de la livraison une fois la trappe mobile 14 fermée ou lorsque le livreur scanne une confirmation de livraison au niveau du lecteur).

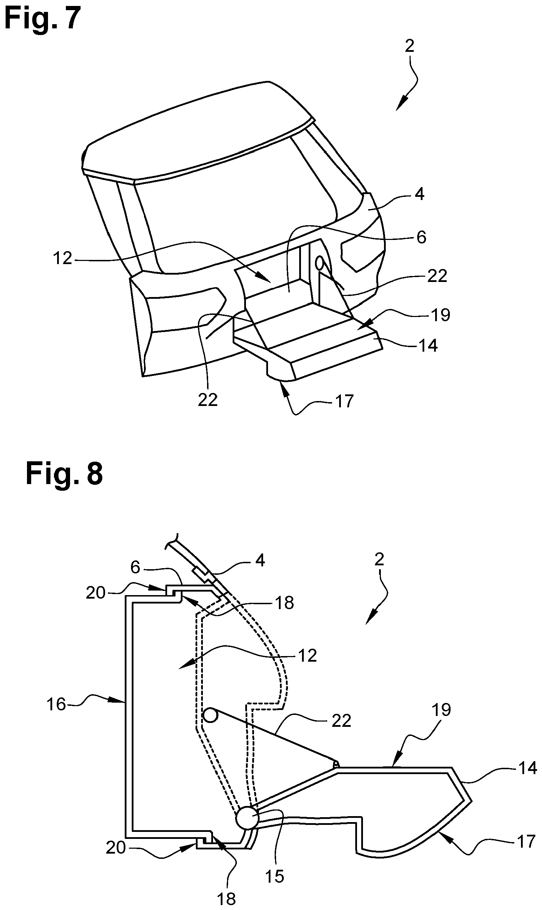

L'ouverture et la fermeture de la trappe mobile 14 peuvent être manuelles, la trappe mobile 14 descendant sous l'effet de son propre poids. Dans ce cas, et après déverrouillage de cette dernière, la personne souhaitant avoir accès à la cavité 12 ouvre la trappe mobile 14. On peut prévoir la présence de moyens de retenue 22, comme par exemple des câbles et enrouleurs illustrés sur les figures 7 et 8 pour déterminer une course maximale de la trappe mobile 14. Tout autre moyen de retenue 22 peut être envisagé (au moins un câble mais sans enrouleur par exemple, présence d'au moins un vérin, etc.).

L'ouverture et la fermeture de la trappe mobile 14 peuvent alternativement être automatisées. Le ou les enrouleurs évoqués plus haut peuvent être motorisés à cet effet. On peut également citer la motorisation d'au moins un vérin ou encore la présence d'un moteur pouvant être placé au niveau de l'axe de rotation de la trappe mobile 14 (le moteur pourrait également faire office de moyen de retenue 22 en se verrouillant après un nombre de rotation déterminé.

Dès lors, et après déverrouillage de la trappe mobile 14 par un tiers, des moyens de mise en mouvement de cette dernière, moyens connectés à l'unité de commande électronique, permettent l'ouverture de la trappe mobile 14. Après dépôt d'un élément à l'intérieur de la cavité 12, ces mêmes moyens de mise en mouvement peuvent permettre la fermeture de la trappe mobile 14. L'ouvrant peut à cet effet comprendre des moyens accessibles à la personne ayant accès à la cavité 12, par exemple un interrupteur, permettant de transmettre l'instruction de fermeture à l'unité de commande électronique afin de permettre la fermeture de la trappe mobile 14. La fermeture automatisée peut également avoir lieu de manière totalement automatique après expiration d'un temps d'ouverture prédéfini.

Il est également possible de prévoir que seule la fermeture soit automatisée afin de s'assurer que cette dernière ait bien lieu et que la trappe mobile 14 ne demeure pas ouverte après la livraison et départ du livreur.

L'invention n'est pas limitée aux modes de réalisation présentés et d'autres modes de réalisation apparaîtront clairement à l'homme du métier.

Il est notamment possible d'envisager d'autres mouvements de la trappe mobile que ceux décrits ci-dessus.

Il est également possible d'utiliser d'autres moyens de rappel, d'autres moyens de retenue ou encore d'autres moyens d'ouverture/fermeture que ceux mentionnés.

### Liste des signes de référence

2 : ouvrant arrière
4 : panneau extérieur
6 : doublure
12 : cavité
14 : trappe mobile
15 : articulation
16 : fond mobile
17 : paroi externe
18, 20 : butées mécaniques de fin de course
19 : paroi interne
22 : moyens de retenue

## Revendications

1. Ouvrant arrière (2) de véhicule automobile comprenant :
- un panneau extérieur (4),
- une doublure (6), et
- une cavité (12) ménagée entre le panneau extérieur (4) et la doublure (6),
la cavité (12) étant accessible à partir d'une trappe mobile (14) apte à obturer une ouverture ménagée dans le panneau extérieur (4),
**caractérisé en ce que** l'ouvrant arrière (2) comprend des moyens aptes à faire varier un volume de la cavité (12), la doublure (6) comprenant un fond mobile (12).

2. Ouvrant arrière (2) selon la revendication 1, dans lequel la doublure (6) comprend un renfoncement formant un fond de la cavité (12).

3. Ouvrant arrière (2) selon l'une quelconque des revendications précédentes, dans lequel le fond mobile (16) est mobile en translation, de préférence par un mouvement télescopique.

4. Ouvrant arrière (2) selon l'une quelconque des revendications précédentes, dans lequel le fond mobile (16) est apte à être mis en mouvement de manière automatisée.

5. Ouvrant arrière (2) selon l'une quelconque des revendications précédentes comprenant des moyens de retenue (22) aptes à bloquer la trappe mobile (14) dans une position d'ouverture maximale.

6. Ouvrant arrière (2) selon l'une quelconque des revendications précédentes comprenant des moyens automatisés d'ouverture et de fermeture de la trappe mobile (14).

## Patentansprüche

1. Kraftfahrzeug-Heckklappe (2), bestehend aus:
- einer Außenplatte (4),
- einer Auskleidung (6), und
- einen Hohlraum (12), der zwischen der Außenplatte (4) und der Auskleidung (6)
ausgebildet ist, wobei der Hohlraum (12) von einer beweglichen Klappe (14) aus zugänglich ist, die eingerichtet ist, eine in der Außenplatte (4) ausgebildete Öffnung zu schließen,
**dadurch gekennzeichnet, dass** die Heckklappe (2) Mittel aufweist, die eingerichtet sind, ein Volumen des Hohlraums (12) zu verändern, wobei die Auskleidung (6) einen beweglichen Boden (16) aufweist.

2. Heckklappe (2) nach Anspruch 1, wobei die Auskleidung (6) eine Ausnehmung aufweist, die einen Boden des Hohlraums (12) bildet.

3. Heckklappe (2) nach einem der vorhergehenden Ansprüche, wobei der bewegliche Boden (16) translatorisch, vorzugsweise durch eine Teleskopbewegung, bewegbar ist.

4. Heckklappe (2) nach einem der vorhergehenden Ansprüche, wobei der bewegliche Boden (16) eingerichtet ist, automatisiert in Bewegung gesetzt zu werden.

5. Heckklappe (2) nach einem der vorhergehenden Ansprüche, die eine Rückhalteeinrichtung (22) aufweist, die geeignet ist, die bewegliche Klappe (14) in einer maximalen Öffnungsposition zu blockieren.

6. Heckklappe (2) nach einem der vorhergehenden Ansprüche, aufweisend automatisierte Mitteln zum Öffnen und Schließen der beweglichen Klappe (14).

## Claims

1. Rear hatch (2) of a motor vehicle comprising:
- an outer panel (4),
- a liner (6), and
- a cavity (12) provided between the outer panel (4) and the liner (6),
the cavity (12) being accessible from a mobile trap door (14) capable of closing an opening provided in the outer panel (4),
**characterized in that** the rear opening (2) comprises means adapted to vary a volume of the cavity (12), the liner (6) comprising a movable bottom (12).

2. Rear hatch (2) according to claim 1, wherein the liner (6) comprises a recess forming a bottom of the cavity (12).

3. Rear hatch (2) according to any one of the preceding claims, wherein the movable bottom (16) is movable in translation, preferably by a telescopic movement.

4. Rear opening (2) according to any one of the preceding claims, wherein the movable bottom (16) is adapted to be set in motion in an automated.

5. Rear hatch (2) according to any one of the preceding claims comprising retaining means (22) adapted to block the mobile trap door (14) in a maximum opening position.

6. Rear hatch (2) according to any one of the preceding claims comprising automated means for opening and closing the mobile trap door (14).
